(19) **Europäisches Patentamt European Patent Office Office européen des brevets**

(11) **EP 2 692 693 B1**

(12) **EUROPEAN PATENT SPECIFICATION**

(45) Date of publication and mention of the grant of the patent:
**04.07.2018 Bulletin 2018/27**

(51) Int Cl.:
***C01G 53/00*** *(2006.01)*

(21) Application number: **13158728.9**

(22) Date of filing: **12.03.2013**

(54) **Positive active material for lithium secondary battery, manufacturing method thereof, lithium secondary battery electrode, and lithium secondary battery**

Aktivmaterial für positive Elektroden für eine Lithium-Sekundärbatterie, Herstellungsverfahren davon, Lithium-Sekundärbatterieeelektrode und Lithium-Sekundärbatterie

Matériau positif actif pour batterie secondaire au lithium, son procédé de fabrication, électrode de batterie secondaire au lithium et batterie secondaire au lithium

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2012 JP 2012172535**
**26.12.2012 JP 2012282964**

(43) Date of publication of application:
**05.02.2014 Bulletin 2014/06**

(73) Proprietor: **GS Yuasa International Ltd.**
**Kisshoin, Minami-ku,**
**Kyoto-shi, Kyoto 601-8520 (JP)**

(72) Inventors:
• **ENDO, Daisuke**
**Kyoto-shi, Kyoto 601-8520 (JP)**
• **MURAKAMI, Motonobu**
**Kyoto-shi, Kyoto 601-8520 (JP)**
• **MURAMATSU, Hiromasa**
**Kyoto-shi, Kyoto 601-8520 (JP)**

(74) Representative: **Vossius & Partner**
**Patentanwälte Rechtsanwälte mbB**
**Siebertstrasse 3**
**81675 München (DE)**

(56) References cited:
**WO-A1-2011/040383     WO-A1-2011/071094**
**WO-A1-2011/125722**

**Description**

This disclosure relates to a positive active material for a lithium secondary battery, a manufacturing method thereof, a lithium secondary battery electrode containing the positive active material, and a lithium secondary battery including the electrode.

In recent years, nonaqueous electrolyte secondary batteries are widely used as power supplies for mobile terminals and the like. A lithium ion secondary battery is one type of nonaqueous electrolyte secondary batteries, and lithium cobalt oxide ($LiCoO_2$) is mainly used as a positive active material thereof. However, the battery using $LiCoO_2$ as a positive active material has a discharge capacity of only about 120 to 130 mAh/g.

To improve the discharge capacity of a lithium secondary battery, a solid solution obtained by mixing $LiCoO_2$ and other compounds is known as a positive active material. As an example of such a solid solution, $Li[Co_{1-2x}Ni_xMn_x]O_2$ ($0 < x \leq 1/2$) is known in the art. This solid solution has an $\alpha$-$NaFeO_2$ type crystal structure and is composed of three components of $LiCoO_2$, $LiNiO_2$, and $LiMnO_2$. A lithium secondary battery that contains $LiNi_{1/2}Mn_{1/2}O_2$ or $LiCo_{1/3}Ni_{1/3}Mn_{1/3}O_2$ (one of examples of the solid solution) as a positive active material has a discharge capacity of 150 to 180 mAh/g. Therefore, such a lithium secondary battery containing the positive active material has an excellent discharge capacity and an excellent charge-discharge cycle performance as compared with a lithium secondary battery containing a $LiCoO_2$-based positive active material.

In addition to the above-mentioned so-called $LiMeO_2$ type active materials, so-called lithium excess type active materials have been known in the art (see, for example, U.S. Patent No. 6,677,082, U.S. Patent No. 7,135,252, JP-A-2010-86690, and WO2012/091015). In the lithium excess type active material, a composition ratio (Li/Me) of lithium (Li) to a transition metal (Me) is higher than 1 (for example, a Li/Me ratio of 1.25 to 1.6) as compared with the $LiMeO_2$ type active material. Note that the lithium excess type active material can be represented by $Li_{1+\alpha}Me_{1-\alpha}O_2$ ($\alpha > 0$). Assuming herein that the composition ratio Li/Me of lithium (Li) to the ratio of the transition metal (Me) is $\beta$,$\beta = (1 + \alpha)/(1 - \alpha)$ holds. Accordingly, when Li/Me is 1.5, $\alpha = 0.2$ holds, for example.

The lithium excess type active material disclosed in the above-mentioned patent documents will be described below.

First, the lithium excess type active material disclosed in the specification of U.S. Patent No. 6,677,082 and the specification of U.S. Patent No. 7,135,252 is represented by a general formula $xLiMeO_2 \cdot (1- x)Li_2M'O_3(0 < x < 1)$. In this formula, M and M' represent metal ions, respectively. Specifically, for example, assuming that M is one or more selected from the group consisting of Mn, Co, and Ni and M' is Mn. According to these patent documents, this Li-enriched type active material has a crystal structure that is more stabilized than that of the $LiMeO_2$ type active material. According to these patent documents, a lithium secondary battery having a larger discharge capacity can be obtained by using this lithium excess type active material, as compared with the case of using a $LiMeO_2$ type active material.

The lithium excess type active material disclosed in JP 2010-86690 A has a composition as described below. That is, as set forth in claim 1 of JP 2010-86690 A, the active material for a lithium secondary battery is an active material for a lithium secondary battery that includes a solid solution of a lithium transition metal composite oxide having an $\alpha$-$NaFeO_2$ type crystal structure. The composition ratio of Li, Co, Ni, and Mn contained in this solid solution satisfies the formula of $Li_{1+1/3x}Co_{1-x-y}Ni_{y/2}Mn_{2x/3+y/2}$ ($x + y \leq 1$, $0 \leq y$, $1 - x - y = z$). Further, in a $Li[Li_{1/3}Mn_{2/3}]O_2(x)$-$LiNi_{1/2}Mn_{1/2}O_2(y)$-$LiCoO_2(z)$-based triangular phase diagram, (x, y, z) is represented by values on the line of a heptagon ABCDEFG including point A (0.45, 0.55, 0), point B (0.63, 0.37, 0), point C (0.7, 0.25, 0.05), point D (0.67, 0.18, 0.15), point E (0.75, 0, 0.25), point F (0.55, 0, 0.45), and point G (0.45, 0.2, 0.35) as respective vertices, or represented by values within the range of the heptagon ABCDEFG. On the other hand, in this active material, the ratio between a strength ($I_{(003)}$) of a diffraction peak of a (003) line and a strength ($I_{(104)}$) of a diffraction peak of a (104) line in the X-ray diffraction measurement is represented by $I_{(003)}/I_{(104)} \geq 1.56$ before charging and discharging, and is represented by $I_{(003)}/I_{(104)} > 1$ after discharging. According to this patent document, the use of the active material for a lithium secondary battery in which Li is enriched in the manner as described above makes it possible to obtain a lithium secondary battery having a high discharge capacity and a high discharge capacity particularly in a potential region at 4.3 V or lower.

The lithium excess type active material disclosed in WO2012/091015 is composed as follows: as described in claim 1 of this patent document, the active material for a lithium secondary battery is a positive active material for a nonaqueous electrolyte secondary battery having an $\alpha$-$NaFeO_2$ type crystal structure and containing lithium-transition metal composite oxide represented by a composition formula of $Li_{1-\alpha}Me_{1-\alpha}O_2$ (Me is a transition metal element including Co, Ni, and Mn; $\alpha > 0$), where a molar ratio Li/Me of Li to the above-mentioned transition metal element Me is 1.2 to 1.6. In this active material, a molar ratio Co/Me of Co contained in the above-mentioned transition metal element Me is 0.02 to 0.23. The molar ratio Mn/Me of Mn contained in the above-mentioned transition metal element Me is 0.62 to 0.72. When the material electrochemically oxidizes up to a potential of 5.0 V (vs.Li/Li⁻), the material is observed as a single phase that attributes to a space group R3-m on an X-ray diffraction diagram. According to WO2012/091015, the use of such a positive active material makes it possible to obtain a nonaqueous electrolyte secondary battery that is excellent in discharge capacity, charge-discharge cycle performance, initial efficiency, and high rate discharge performance.

The discharge capacity of the lithium secondary battery including the above-mentioned so-called lithium excess type active material is generally higher than the discharge capacity of the lithium secondary battery of a so-called LiMeO$_2$ type active material.

Incidentally, in recent years, a so-called eco-friendly car has been attracting an attention in the automobile industry, because the eco-friendly car poses a less load on the environment. Accordingly, vehicles such as an electric vehicle (EV), a hybrid electric vehicle (HEV), and a plug-in hybrid electric vehicle (P-HEV), which use a lithium secondary battery as a power source, have been put to practical use. A positive active material for a lithium secondary battery used for such vehicles is required to have a higher discharge capacity and a high rate discharge performance, as compared with a positive active material for a lithium secondary battery to be mounted on small equipment such as a mobile terminal or the like described above.

WO 2011/040383 A1 relates to a positive electrode active material powder which is composed of boron and a compound that has at least a crystal structure belonging to the space group R-3m and a crystal structure belonging to the space group C2/m.

WO 2011/125722 A1 relates to a lithium transition metal compound powder having the function of adding and subtracting lithium ions. Inside the powder particles is a compound having SEM-EDX peaks attributed to at least one element selected from group 16 of the third or higher period of the Periodic Table and at least one element selected from group 5 to 7 elements of the fifth and sixth periods.

WO 2011/071094 A1 relates to a method for producing a lithium composite metal oxide, a lithium composite metal oxide, and a nonaqueous electrolyte secondary battery.

A positive active material for a lithium secondary battery according to the present invention is a positive active material for a lithium secondary battery containing a lithium-transition metal composite oxide represented by a composition formula of Li$_{1+\alpha}$Me$_{1-\alpha}$O$_2$ (Me is a transition metal element including Co, Ni, and Mn; 1.2 < (1 + $\alpha$)/(1 - $\alpha$) < 1.6), wherein a molar ratio (Co/Me) of Co contained in the Me ranges from 0.24 to 0.36, wherein a molar ratio (Mn/Me) of Mn contained in the Me ranges from 0.44 to 0.65, and when a space group R3-m is used for a crystal structure model based on an X-ray diffraction pattern, at least one of the followings are satisfied: a half width of a diffraction peak that attributes to a (003) line ranges from 0.204° to 0.303°, and a half width of a diffraction peak that attributes to a (104) line ranges from 0.278° to 0.424°.

According to this disclosure, it is possible to provide a lithium secondary battery that includes a lithium secondary battery electrode including a positive active material containing a novel lithium-transition metal composite oxide, and has a high discharge capacity and excellent high rate discharge performance.

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

This disclosure provides a positive active material for a lithium secondary battery having an excellent high rate discharge performance, a manufacturing method thereof, and a lithium secondary battery using the positive active material.

The active material for a lithium secondary battery in accordance with this disclosure contains a lithium-transition metal composite oxide. The composition of this oxide is of a so-called lithium excess type and includes a transition metal element Me that contains Co, Ni, and Mn, and Li, thereby giving a high discharge capacity. Specifically, this oxide is represented by the following composition formula (1):.

$$\mathrm{Li_{1+\alpha}Me_{1-\alpha}O_2}\ (\alpha > 0) \qquad \cdots (1)$$

In the above-mentioned composition formula (1), the molar ratio Li/Me of Li to the transition metal element Me is represented by (1 + $\alpha$)/(1 - $\alpha$).

In this disclosure, to obtain a lithium secondary battery having a large discharge capacity, the above-mentioned molar ratio Li/Me is set to be higher than 1.2 and smaller than 1.6 (that is, 1.2 < (1 + $\alpha$)/(1 - $\alpha$) < 1.6). Especially, it is preferable to select a lithium-transition metal composite oxide having a molar ratio Li/Me of 1.25 to 1.5, from the viewpoint of obtaining a lithium secondary battery having an especially high rate discharge capacity and excellent discharge performance.

In this disclosure, to achieve a high rate discharge performance of the lithium secondary battery, the molar ratio Co/Me of Co to the transition metal element Me is set in the range of 0.24 to 0.36 in the above-mentioned composition formula (1). To increase the discharge capacity and achieve a high rate discharge performance, the molar ratio Co/Me is preferably set in the range of 0.24 to 0.30.

To obtain a lithium secondary battery having a high rate discharge capacity and an excellent discharge performance, the molar ratio Mn/Me of Mn to the transition metal element Me is set in the range of 0.44 to 0.65, and preferably in the range of 0.48 to 0.59 in the above-mentioned composition formula (1).

The lithium-transition metal composite oxide according to this disclosure can also be expressed as the following composition formula (2):

$$\mathrm{Li}_{1+\alpha}(\mathrm{Co}_a\mathrm{Ni}_b\mathrm{Mn}_c)_{1-\alpha}\mathrm{O}_2 \quad \cdots (2)$$

where $1.2 < (1 + \alpha)/(1 - \alpha) < 1.6$, $a + b + c = 1$, $0.24 \leq a \leq 0.36$, $b > 0$, $c > 0$

Essentially, this lithium-transition metal composite oxide is a complex oxide containing Li, Co, Ni, and Mn. However, to improve the discharge capacity, the complex oxide preferably contains Na, and the content of Na is preferably equal to or more than 1000 ppm, and more preferably, 2000 to 10000 ppm.

As described later, according to an example of a method of manufacturing an active material for a lithium secondary battery of this disclosure, a coprecipitation method is employed in which a coprecipitation precursor in which Co, Ni, and Mn are present in one particle is prepared in advance and Li salt is mixed therein and sintered. To mix Na in a target solid solution in this coprecipitation method, a sodium compound such as sodium carbonate is used as a neutralizer in the process of preparing a carbonate precursor as a coprecipitation precursor, and Na is left in a washing process. Alternatively, in the sintering process after washing, a sodium compound such as sodium carbonate can be added.

In the lithium-transition metal composite oxide according to this disclosure, a small amount of another metal (for example, alkali metal other than Na, alkaline earth metal such as Mg and Ca, or a transition metal typified by 3d transition metal such as Fe and Zn) within the range in which the effect of the oxide is not impaired.

The lithium-transition metal composite oxide according to this disclosure has an $\alpha$-NaFeO$_2$ structure. The crystal structure of the above-mentioned lithium-transition metal composite oxide obtained after the synthesis (before the charging and discharging process) attributes to a space group P3$_1$12 or R3-m. Out of these structures, in a crystal structure that attributes to the space group P3$_1$12, a superlattice peak (peak shown in a monoclinic crystal of Li[Li$_{1/3}$Mn$_{2/3}$]O$_2$ type) is confirmed in the vicinity of $2\theta = 21°$ in an X-ray diffraction diagram obtained using a CuK$\alpha$ radiation. However, if a charging process involving a reaction in which Li contained in a transition metal site desorbs is performed on the lithium-transition metal composite oxide at least once, the symmetry of the crystal of this oxide changes, so that the above-mentioned superlattice peak disappears. As a result, the above-mentioned lithium-transition metal composite oxide obtained after the charging process attributes to the space group R3-m. The term "P3$_1$12" herein described refers to a crystal structure model in which the atoms positions of 3a, 3b, and 6c sites in R3-m are segmented. In other words, if some order is found in the atomic arrangement of R3-m, a crystal model that attributes to the space group P3$_1$12 is employed. Note that the term "R3-m" herein described should originally be expressed by adding a bar "-" above the number "3" of "R3m".

In the lithium-transition metal composite oxide according to this disclosure, when the space group R3-m is used for the crystal structure model based on the X-ray diffraction pattern, a half width of a diffraction peak that attributes to a (003) line preferably ranges from 0.204° to 0.303°, or a half width of a diffraction peak that attributes to a (104) line preferably ranges from 0.278° to 0.424°. This makes it possible to increase the discharge capacity of the positive active material and improve the high rate discharge performance. Note that a diffraction peak of a diffraction angle $2\theta = 18.6° \pm 1°$ is indexed to the (003) line in a Miller index hkl in the space groups P3$_1$12 and R3-m, and a diffraction peak of a diffraction angle $2\theta = 44.1° \pm 1°$ is indexed to a (114) line in the space group P3$_1$12 and is also indexed to a (104) line in the space group R3-m.

It is preferable that the crystal structure of the lithium-transition metal composite oxide should not be changed during overcharging. The state in which the crystal structure is not changed can be confirmed by observation as a single phase that attributes to the space group R3-m on the X-ray diffraction diagram when the oxide is electrochemically oxidized up to a potential of 5.0 V (vs.Li/Li$^+$). This makes it possible to obtain a lithium secondary battery having an excellent charge-discharge cycle performance.

In the lithium-transition metal composite oxide, an oxygen position parameter is preferably equal to or less than 0.262 after discharging (in a completely discharged state), and is preferably equal to or greater than 0.267 after charging (in a completely charged state). This makes it possible to obtain a lithium secondary battery having an excellent high rate discharge performance. Note that the oxygen position parameter can be obtained by a crystal structure analysis using Rietveld refinement method based on the X-ray diffraction pattern. Specifically, the term "oxygen position parameter" refers to a value "z" obtained when space coordinates of Me (transition metal) are defined as (0, 0, 0), space coordinates of Li (lithium) are defined as (0, 0, 1/2), and space coordinates of O (oxygen) are defined as (0, 0, z) in the $\alpha$-NaFeO$_2$ type crystal structure of the lithium-transition metal composite oxide that attributes to the space group R3-m.

In other words, the oxygen position parameter is a relative index indicating how far the position of O (oxygen) is from the position of Me (transition metal) (see WO2012/091015).

In the lithium-transition metal composite oxide according to this disclosure and the carbon precursor thereof, the 50% particle diameter (D50) in the particle size distribution measurement is preferably 5 to 18 $\mu$m. The term "50% particle diameter (D50)" in the particle size distribution measurement herein described refers to a particle diameter at which the accumulated volume in the particle size distribution of the carbonate precursor and lithium-transition metal composite oxide, in which primary particles of material aggregate to form secondary particles, is 50%. In the case of preparing a lithium-transition metal composite oxide from a hydroxide precursor, an excellent performance cannot be obtained unless the particle diameter of the oxide is further reduced. However, if the lithium-transition metal composite oxide is prepared from the carbonate precursor, a positive active material having a high discharge capacity can be obtained even when the 50% particle diameter (D50) in the particle size distribution measurement is about 5 to 18 $\mu$m.

To obtain a lithium secondary battery having an excellent initial efficiency and high rate discharge performance, the BET specific surface of the positive active material according to this disclosure is preferably equal to or more than 1 $m^2$/g, and more preferably, 2 to 5 $m^2$/g.

To obtain a lithium secondary battery having an excellent discharge performance, the tap density of the positive active material according to this disclosure is preferably equal to or higher than 1.25 g/cc, and more preferably, equal to or higher than 1.7 g/cc.

In the lithium-transition metal composite oxide according to this disclosure, a pore size at which the differential pore volume indicates a maximum value, which is obtained by BJH method from an adsorption isotherm using a nitrogen gas adsorption method, is preferably in the range of 30 to 40 nm, and the peak differential pore volume is preferably 0.85 $mm^3$/(g·nm) or more. By setting the peak differential pore volume to be equal to or more than 0.85 $mm^3$/(g·nm), a lithium secondary battery having an excellent initial efficiency can be obtained. Further, by setting the peak differential pore volume to be equal to or less than 1.75 $mm^3$/(g·nm), a lithium secondary battery having an excellent initial efficiency as well as an excellent discharge capacity can be obtained. Accordingly, the peak differential pore volume of the lithium-transition metal composite oxide is preferably 0.85 to 1.75 $mm^3$/(g·nm).

Next, a method of manufacturing an active material for a lithium secondary battery according to this disclosure will be described.

The active material for a lithium secondary battery according to this disclosure can be basically obtained in the manner as described below. Specifically, the raw material of the active material is adjusted so that metallic elements (Li, Mn, Co, and Ni) are contained as in the compositions of the target active material. Next, the target active material is obtained by sintering the raw material of the active material. In this case, however, it is preferable to prepare about 1 to 5% more than the content of Li raw material contained in the raw material of the active material, considering that part of the Li raw materials disappears during the sintering process.

Incidentally, a so-called solid state method and a coprecipitation method are known for preparing an oxide having a target composition. Each salt of Li, Co, Ni, and Mn is mixed and sintered in the solid state method. On the other hand, in the coprecipitation method, a coprecipitation precursor in which Co, Ni, and Mn are present in one particle is prepared in advance, and Li salt is mixed therein and sintered. In the synthesis process using the solid state method, especially Mn is hardly mixed uniformly to Co and Ni. Accordingly, it is difficult to obtain a sample in which each element is uniformly distributed in one particle. Many attempts have been made to mix Mn (such as $LiN_{1-x}Mn_xO_2$) in part of the raw material of the active material containing Ni or Co by the solid state method. However, a uniform phase is easily obtained at an atomic level by selecting the coprecipitation method. For this reason, in the following examples, the coprecipitation method is employed.

In the case of preparing the coprecipitation precursor in the coprecipitation method, Mn out of Co, Ni, and Mn is easily oxidized, which makes it difficult to prepare the coprecipitation precursor in which Co, Ni, and Mn are uniformly distributed in a bivalent state. Accordingly, uniform mixing at the atomic level of Co, Ni, and Mn may be insufficient.

As described above, in this disclosure, the positive active material for a lithium secondary battery contains a lithium-transition metal composite oxide represented by a composition formula of $Li_{1+\alpha}Me_{1-\alpha}O_2$ (Me is a transition metal element including Co, Ni, and Mn; 1.2 < (1 + $\alpha$)/(1 - $\alpha$) < 1.6), and the molar ratio (Co/Me) of Co contained in the Me represented by the composition formula is in the range of 0.24 to 0.36. The molar ratio Mn/Me of Mn to the transition metal element Me is 0.44 to 0.65, and preferably, 0.48 to 0.59. Accordingly, the molar ratio (Mn/Me) of Mn contained in the Me represented by the above-mentioned composition formula is higher than the molar ratio (Co/Me) of Co and the molar ratio (Ni/Me) of Ni. Accordingly, it is especially important to remove dissolved oxygen in the aqueous solution, which is a reaction solution, in the process of manufacturing a precursor by coprecipitating a mixture containing Co, Ni, and Mn in the solution.

Examples of the method of removing dissolved oxygen from the above-mentioned aqueous solution include a method of bubbling a gas containing no oxygen upon preparation of a coprecipitation precursor. The gas containing no oxygen is not limited, and nitrogen gas, argon gas, carbon dioxide ($CO_2$), and the like can be used. Among these gases, $CO_2$ is preferably used in the examples described below. This is because when carbon dioxide is employed as the gas containing no oxygen upon preparation of the coprecipitation carbonate precursor, an environment in which carbonate is easily generated is provided.

In the coprecipitation method, the pH of the reaction solution in the process of manufacturing a precursor by coprecipitating a mixture containing Co, Ni, and Mn in the solution is not limited. However, in the case of preparing the above-mentioned coprecipitation precursor as the coprecipitation carbonate precursor, the pH of the reaction solution is set in the range of 7.5 to 11. To increase the tap density, the pH of the reaction solution is preferably set to 9.4 or lower. This is because the tap density can be increased to 1.25 g/cc or more and the high rate discharge performance can be improved. The pH of the reaction solution is more preferably set to 8.0 or less. This is because the particle growth speed can be promoted and the stirring duration after completion of material aqueous solution dropping can be shortened.

The above-mentioned coprecipitation precursor is preferably a compound in which Mn, Ni, and Co are uniformly mixed.

In this disclosure, a coprecipitation precursor is preferably used as carbonate so as to obtain an active material for a lithium secondary battery having a high discharge capacity.

In the coprecipitation method, for example, a crystallization reaction using a complexing agent can be employed. This crystallization reaction enables preparation of a precursor having a higher bulk density. A Li source is mixed in the precursor obtained by this crystallization reaction and is sintered, thereby obtaining an active material having a high density. As a result, the energy density per electrode area can be improved.

Examples of each of the Mn compound, the Ni compound, and the Co compound contained in the material of the above-mentioned coprecipitation precursor are as follows. Examples of the Mn compound include manganese oxide, manganese carbonate, manganese sulfate, manganese nitrate, and manganese acetate. Examples of the Ni compound include nickel hydroxide, nickel carbonate, nickel sulfate, nickel nitrate, and nickel acetate. Examples of the Co compound include cobalt sulfate, cobalt nitrate, and cobalt acetate.

This disclosure employs a crystallization reaction to obtain a coprecipitation carbonate precursor by dropping and supplying the material aqueous solution of the coprecipitation precursor to a reaction vessel in which the alkaline property is maintained. Examples of a neutralizer used for the crystallization reaction include a lithium compound, a sodium compound, and a potassium compound. Preferably, the neutralizer is sodium carbonate, a mixture of sodium carbonate and lithium carbonate, or a mixture of sodium carbonate and potassium carbonate.

To set the Na content of the precursor, which is obtained by the crystallization reaction, to be equal to or more than 1000 ppm, the molar ratio (Na/Li) between sodium carbonate and lithium carbonate or the molar ratio (Na/K) between sodium carbonate and potassium carbonate is preferably equal to or more than 1/1 [M]. This is because the molar ratio can prevent Na from being excessively removed (Na content is decreased to less than 1000 ppm) in the subsequent washing process.

The dropping speed of the above-mentioned material aqueous solution greatly affects the uniformity of the distribution of elements in one particle of the generated coprecipitation precursor. In particular, Mn hardly forms a uniform element distribution with Co and Ni, so that an attention should be paid. The dropping speed is preferably 30 ml/min or lower depending on the size of the reaction vessel, stirring conditions, pH, reaction temperature, and the like which are used for the crystallization reaction. To improve the discharge capacity, the dropping speed is preferably equal to or lower than 10 ml/min, and most preferably, 5 ml/min or lower.

In the crystallization reaction using the complexing agent, the coprecipitation precursor is formed after two-stage reaction. Specifically, the first stage is a metal complex forming reaction that occurs when a material aqueous solution is dropped in the reaction vessel. The second stage is a deposition forming reaction that occurs during retention of the metal complex in the reaction vessel. In other words, at the second stage, when a complexing agent exists in the reaction vessel and a constant convection condition is applied, stirring is further continued after completion of dropping of the material aqueous solution, thereby promoting rotation of particles and revolution within the stirring vessel. As a result, particles collide with each other and are crystallized and grown into a concentric spherical shape stepwise in this stirring process. Accordingly, after completion of dropping the material aqueous solution, the duration for stirring is appropriately selected to thereby obtain a coprecipitation precursor having a target particle diameter.

The stirring duration after completion of material aqueous solution dropping is appropriately determined depending on the size of the reaction vessel, stirring conditions, pH, reaction temperature, and the like which are used for the above-mentioned crystallization reaction. This stirring duration is preferably 0.5 h or more, and more preferably, 1 h or more, so as to grow particles into uniform spherical particles. The stirring duration is preferably 30 h or less, more preferably 25 h or less, and most preferably, 20 h or less, so as to suppress deterioration in the output power performance in the low SOC region of the battery having an extremely large particle diameter.

A preferable stirring duration for setting the 50% particle diameter (D50) to 5 to 18 $\mu$m varies depending on the pH of the reaction solution in the reaction vessel. For example, when the pH is controlled to 7.5 to 8.2, the stirring duration is preferably 1 to 15 h, and when the pH is controlled to 8.3 to 9.4, the stirring duration is preferably 3 to 20 h.

When a sodium compound such as sodium carbonate is used as a neutralizer to prepare particles of the carbonate precursor, sodium ions adhering to the particles are cleaned and removed in the subsequent washing process.

In this case, the sodium ions are preferably cleaned and removed under the condition in which the Na content remaining in the particles is 1000 ppm or more in this disclosure. As an example of the condition, the number of times of washing using ion-exchange water of 200 ml is five when the prepared carbonate precursor is extracted from the reaction vessel by suction filtration.

The obtained carbonate precursor is dried at a temperature of 100°C or higher, thereby making it possible to remove moisture as much as possible in a short period of time from the carbonate precursor. However, it is preferable to dry the carbonate precursor at a temperature equal to or more than 80°C and less than 100°C and under a normal pressure in an air atmosphere. This is because drying for a long period of time at 80°C enables obtainment of the active material showing more excellent electrode characteristics. Although the reason for this is not clear, the present inventors consider the reason as follows. That is, the carbonate precursor has a specific surface of 50 to 100 $m^2$/g, so it is easy to adsorb moisture. Thus, the carbonate precursor is dried at a low temperature, so that a certain amount of adsorbed water is left in the pores of the precursor. In the sintering process in which the precursor in this state is mixed with Li salt, melting Li is allowed to enter the pores so as to be replaced with the adsorbed water removed from the pores of the precursor. Specifically, the active material having a more uniform composition can be obtained, as compared with the case of drying at 100°C or higher.

Incidentally, the carbonate precursor obtained by drying at 100°C presents dark brown color. On the other hand, the carbonate precursor obtained by drying at 80°C presents flesh color. Accordingly, the precursors processed at different drying temperatures can be distinguished from each other based on the color of the precursor. The difference in color enables quantitative evaluation of the different precursors obtained at different drying temperatures.

The present inventors measured the hue of the carbonate precursor obtained by drying at 100°C and the hue of the carbonate precursor obtained by drying at 80°C by using Color Reader CR10 produced by Konica Minolta Holdings, Inc. Next, the measured hue of each precursor was compared with the standard colors for coating (JPMA Standard Paint Colors) Ver. F, 2011, issued by Japan Paint Manufacturers Association and compliant with JIS Z 8721. Note that in the hue measurement using Color Reader CR10, a value dL* representing the brightness increases toward white and decreases toward black. A value da* representing the hue increases toward red and decreases toward green (red becomes less). A db* value representing the hue decreases toward yellow and increase toward blue (yellow becomes less).

When the hue in a dried form at 100°C is compared with the standard color F05-20B, the hue falls within the range of the red color direction from this standard color to the standard color F05-40D. When the hue in a dried form at 100°C is compared with the standard color FN-10, the hue falls within the range of the white color direction from this standard color to the standard color FN-25. It is confirmed that the hue in the dried form at 100°C has a minimum chrominance with the hue presented by the standard color F05-20B among these standard colors.

On the other hand, when the hue in a dried form at 80°C is compared with the standard color F19-50F, the hue falls within the range of the white color direction from this standard color to the standard color F19-70F. When the hue in a dried form at 80°C is compared with the standard color F09-80D, the hue falls within the range of the black color direction from this standard color to the standard color F09-60H. It is confirmed that the hue in the dried form at 80°C has a minimum chrominance with the hue presented by the standard color F19-50F among these standard colors.

From the above findings, the hue of the carbonate precursor can be preferably in the plus (+) direction in all of dL, da, and db, and more preferably, dL is + 5 or more, da is + 2 or more, and db is + 5 or more, as compared with the standard color F05-20B.

The active material for a lithium secondary battery according to this disclosure can be suitably prepared by mixing the carbonate precursor with the Li compound and performing a heat treatment on the mixture. Suitable examples of the Li compound include lithium hydroxide, lithium carbonate, lithium nitrate, and lithium acetate. The amount of Li compound to be mixed with the carbonate precursor is preferably set to be about 1 to 5% excessively, considering that part of the Li compound disappears during sintering.

As described above, the Na content of the lithium-transition metal composite oxide according to this disclosure is equal to or more than 1000 ppm. Accordingly, when Na of the carbonate precursor is equal to or less than 1000 ppm, a method may be employed in which the Li compound and Na compound are mixed with the carbonate precursor in the sintering process, and the Na content of the active material thus obtained is set to 1000 ppm or more. Note that sodium carbonate is preferably used as the Na compound.

When the lithium-transition metal composite oxide according to this disclosure is used as the positive active material, the sintering temperature in the above-mentioned sintering process is 800 to 850°C. This sintering temperature will be described below.

The sintering temperature should be carefully set without exceeding the oxygen release temperature of the active material. In other words, the sintering temperature is preferably set to be lower than a temperature that affects the oxygen release reaction of the active material. The reason for this will be described below.

The sintering temperature affects the reversible capacity (dischargeable capacity in the charging capacity) of the active material. In this regard, the case where the sintering temperature is extremely high will be described first, and the case where the sintering temperature is low will then be described.

If the sintering temperature is extremely high, the obtained active material tends to collapse along with an oxygen release reaction. In this case, not only the main phase of the hexagonal crystal but also the phase defined as the $Li[Li_{1/3}Mn_{2/3}]O_2$ type of the monoclinic crystal tends to be observed not as a solid solution phase but as a split phase. If an extremely large amount of split phase is contained in the active material, the reversible capacity of the active material is decreased. In the active material in which the reversible capacity is decreased, the impurity peak is observed in the vicinity of 35° and in the vicinity of 45° on the X-ray diffraction diagram. Accordingly, the sintering temperature is preferably set to be lower than the temperature that affects the oxygen release reaction of the active material. In the range of the composition according to this disclosure, the oxygen release temperature of the active material is approximately 1000°C or more. However, the oxygen release temperature varies to some extent depending on the composition of the active material, so that it is preferable to check the oxygen release temperature of the active material in advance. In particular, an attention should be paid because it is confirmed that as the amount of Co contained in a sample is higher, the oxygen release temperature of the precursor shifts to a low-temperature side. Note that as a method for checking the oxygen release temperature of the active material, a method may be employed in which a mixture of the coprecipitation precursor and the lithium compound is subjected to heat amount analysis (DTA-TG measurement) so as to simulate the sintering reaction process. In this method, however, there is a possibility that platinum used for a sample chamber of a measurement device is corroded due to the Li component, which may damage the device. Accordingly, it is preferable that the mixture of the coprecipitation precursor and the lithium compound be preliminarily crystallized to some extent at a sintering temperature of about 500°C and the partially crystallized composition be subjected to a heat amount analysis.

Next, the case where the sintering temperature is extremely low will be described. When the sintering temperature is extremely low, the above-mentioned crystallization is insufficient and the electrode characteristics of the obtained active material tend to deteriorate. In this disclosure, the sintering temperature is set to 800°C to 850°C. This sintering temperature enables sufficient crystallization of the mixture of the coprecipitation precursor and the lithium compound, reduces the resistance at the crystal grain boundary, and promotes smooth lithium ion transport.

The present inventors have found the following by analyzing the half width of the diffraction peak of the active material according to this disclosure in detail. Specifically, strain remains in the lattice of the active material obtained by setting the synthesis temperature upon preparation of the solid solution to 750°C or lower. On the other hand, when the synthesis temperature exceeds 750°C, little strain remains in the obtained active material. The crystalline size of the active material increases in proportion to a rise of the synthesis temperature.

Also in the composition of the active material according to this disclosure, the synthesis temperature (sintering temperature) is appropriately set to thereby obtain particles whose crystallite size is sufficiently grown and in which almost no strain occurs in the lattice of the crystal. Accordingly, an excellent discharge capacity can be obtained by the battery using the active material. Specifically, it is preferable to set the synthesis temperature (sintering temperature) and the Li/Me ratio composition such that the strain amount that affects the lattice constant is equal to or less than 2% and the crystallite size is equal to or higher than 50 nm. Note that a change due to expansion and contraction can be found. when charging and discharging are performed by forming the positive electrode material thus prepared as an electrode. However, it is preferable to maintain the crystallite size of 30 nm or more also in the charging and discharging process.

As described above, the sintering temperature should be carefully set without exceeding the oxygen release temperature of the active material. However, when the sintering temperature is equal to or higher than 900°C, even though the sintering temperature does not reach a sintering temperature at which oxygen is emitted from the active material, a crystallization phenomenon due to the fact that primary particles are remarkably grown is found. This can be confirmed by observing the active material obtained after sintering with a scanning electron microscope (SEM). In the active material synthesized through a synthesis temperature equal to or higher than 900°C, primary particles are grown to a size of 0.5 $\mu$m or higher. A battery using such an active material is disadvantageous for $Li^+$ movement in the active material during the charging and discharging reaction, and the high rate discharge performance thereof is degraded. The size of each primary particle is preferably less than 0.5 $\mu$m, and more preferably, 0.3 $\mu$m or less.

Accordingly, to improve the high rate discharge performance, the sintering temperature is in the range of 800 to 850°C in the case of using the lithium-transition metal composite oxide according to claim 1 as the positive active material.

The negative electrode material of the lithium secondary battery according to this disclosure is not particularly limited, as long as the material is capable of precipitating or occluding lithium ions. Examples of the negative electrode material include a titanium-based material such as lithium titanate having a spinel type crystal structure typified by $Li[Li_{1/3}Ti_{5/3}]O_4$, an alloy-based material lithium metal such as Si, Sb, or Sn, a lithium metal-containing alloy such as lithium alloy (lithium-silicon, lithium-aluminum, lithium-lead, lithium-tin, lithium-aluminum-tin, lithium-gallium, and wood's alloy), lithium complex oxide (lithium-titanium), silicon oxide, and an alloy and carbon material, which is capable of occluding or emitting lithium (for example, graphite, hard carbon, low-temperature sintering carbon, and amorphous carbon).

The powder of the positive active material and powder of the negative electrode material desirably have an average particle size of 100 μm or less. In particular, the powder of the positive active material is desirably set to 10 μm or less so as to improve the output power performance of the nonaqueous electrolyte battery. To obtain a predetermined shape of the powder, a grinder, classifier, and the like, which are well known to those skilled in the art, can be used. Examples of such equipment include a mortar, a ball mill, a sand mill, a vibration ball mill, a planet ball mill, a jet mill, a counter jet mill, a swirling-airflow-type jet mill, and a sieve. The grinding method is not particularly limited. Wet-type grinding for allowing water or an organic solvent such as hexane to coexist with a negative electrode material may be employed. The classification method is not particularly limited. A dry-type or wet-type sieve, a wind force classifier, and the like are used as needed.

The positive active material and the negative electrode material, which are the primary structural components of the positive electrode and the negative electrode, have been described above in detail. Note that the above-mentioned positive electrode and negative electrode may contain the above-mentioned primary structural component, as well as a conducting agent, a binding agent, a thickener, a filler, and the like as other structural components. The other structural components will be described below.

The conducting agent is not particularly limited, as long as the conductive agent is an electroconductive material having no adverse effect on the battery performance. In general, the conducting agent contains a mixture of one or more types of conductive materials. Examples of the conductive material include natural graphite (such as squamous graphite, scale-like graphite, or amorphous graphite), artificial graphite, carbon black, acetylene black, ketjen black, carbon whisker, carbon fiber, metal (such as copper, nickel, aluminum, silver, or gold) powder, metallic fiber, and conductive ceramics material. Among these conductive materials, acetylene black is preferably used in terms of electron conductivity and coating property.

The additive amount of the conducting agent relative to the total weight of the positive electrode or negative electrode is preferably 0.1 weight% to 50 weight%, and more preferably, 0.5 weight% to 30 weight%. In particular, it is desirable to grind acetylene black to be used as ultrafine particles of 0.1 to 0.5 μm so as to reduce the amount of necessary carbon.

As a method for mixing the material of the positive electrode or negative electrode with the conducting agent, physical mixing, and desirably, uniform mixing is employed. Accordingly, in the case of mixing the material of the positive electrode or negative electrode with the conducting agent, the mixing is carried out under a dry-type or wet-type condition using a powder mixer such as a V-type mixer, a S-type mixer, an automated mortar, a ball mill, or a planet ball mil.

Next, one type of binding agent or a mixture of a plurality of types of binding agents is used as the binding agent. In general, examples of the binding agent include thermoplastic resins such as polytetrafluoroethylene (PTFE), polyvinylidene fluoride (PVDF), polyethylene, and polypropylene, and polymers having rubber elasticity such as ethylene-propylene-diene terpolymer (EPDM), sulfonated EPDM, styrene-butadiene rubber (SBR), and fluoro-rubber. The additive amount of binding agent with respect to the total weight of the positive electrode or negative electrode is preferably 1 to 50 weight%, and more preferably, 2 to 30 weight%.

The material of the above-mentioned filler is not particularly limited, as long as the material has no adverse effect on the battery performance. Examples of the filler include an olefin-based polymer such as polypropylene and polyethylene, amorphous silica, alumina, zeolite, glass, and carbon. The additive amount of the filler with respect to the total weight of the positive electrode or negative electrode is preferably 30 weight% or less.

Each of the positive electrode and the negative electrode is prepared in the following manner. That is, the above-mentioned primary structural component (the positive active material in the positive electrode, and the negative electrode material in the negative electrode), and other materials are mixed to thereby obtain a mixture. This mixture is mixed with an organic solvent such as N-methylpyrrolidone or toluene, or water. Subsequently, the obtained mixture is coated or press-bonded onto a current collector which is described in detail later, and is subjected to a heat treatment for about two hours at a temperature of about 50°C to 250°C. Thus, the positive electrode or negative electrode is appropriately prepared. Note that as an example of the above-mentioned coating method, a method of coating with any thickness and any shape is desirably employed using means such as roller coating, such as applicator roll, screen coating, doctor blade system, spin coating, or bar coater. However, the coating method is not limited to these.

The nonaqueous electrolyte used for the lithium secondary battery according to this disclosure is not particularly limited, but typical nonaqueous electrolytes, the use of which for a lithium battery has been proposed, can also be used, for example. The nonaqueous solvent and electrolyte salt used for a nonaqueous electrolyte are herein described.

Examples of the nonaqueous solvent used for a nonaqueous electrolyte include cyclic carbonates such as propylene carbonate, ethylene carbonate, butylene carbonate, chloroethylene carbonate, and vinylene carbonate; cyclic esters such as γ-butyrolactone and γ-valerolactone; chain carbonates such as dimethyl carbonate, diethylcarbonate, and ethyl methyl carbonate; chain esters such as methyl formate, methyl acetate, and methyl butyrate; tetrahydrofuran or derivative thereof; ethers such as 1,3-dioxane, 1,4-dioxane, 1,2-dimethoxyethane, 1,4-dibutoxyethane, and methyl diglyme; nitriles such as acetonitrile and benzonitrile; dioxolane or derivative thereof; ethylene sulfide, sulfolane, sultone, or derivative thereof. In this disclosure, these nonaqueous solvents can be used singly or in a combination of two or more of them, but the nonaqueous solvents are not limited thereto.

Examples of electrolyte salt used for a nonaqueous electrolyte include inorganic ionic salts containing one of lithium (Li), sodium (Na) and potassium (K) such as $LiClO_4$, $LiBF_4$, $LiAsF_6$, $LiPF_6$, $LiSCN$, $LiBr$, $LiI$, $Li_2SO_4$, $Li_2B_{10}Cl_{10}$, $NaClO_4$, $NaI$, $NaSCN$, $NaBr$, $KClO_4$, and $KSCN$; and organic ionic salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phtalate, lithium stearyl sulfonate, lithium octylsulfonate, and lithium dodecylbenzenesulfonate. In this disclosure, these ionic compounds can be used singly or as a mixture of two or more of them.

As the above-mentioned electrolyte salt, a mixture of $LiPF_6$ or $LiBF_4$ and a lithium salt having a perfluoro alkyl group such as $LiN(C_2F_5SO_2)_2$ is preferably used. This is because this combination provides advantages of reducing the viscosity of the electrolyte, further improving the low-temperature characteristic of the lithium secondary battery, and enabling control of self discharge of the battery.

Note that a room-temperature fused salt or ionic liquid may also be used as the nonaqueous electrolyte.

To reliably obtain the nonaqueous electrolyte battery having high battery characteristics, the concentration of the electrolyte salt in the nonaqueous electrolyte is preferably 0.1 mol/l to 5 mol/l, and more preferably, 0.5 mol/l to 2.5 mol/l.

A separator for a lithium secondary battery according to this disclosure will be described.

As the separator, a porous membrane and unwoven fabric showing an excellent high rate discharge performance, for example, are preferably used singly or in combination. Examples of the material constituting the separator for a nonaqueous electrolyte battery include polyolefin-based resins typified by polyethylene, polypropylene, and the like; polyester-based resins typified by polyethylene terephthalate, polybutylene terephthalate, and the like; polyvinylidene fluoride; vinylidene fluoride-hexafluoropropylene copolymers; vinylidene fluoride-perfluorovinyl ether copolymers; vinylidene fluoride-tetrafluoroethylene copolymers; vinylidene fluoride-trifluoroethylene copolymers; vinylidene fluoride-fluoroethylene copolymers; vinylidene fluoride-hexafluoroacetone copolymers; vinylidene fluoride-ethylene copolymers; vinylidene fluoride-propylene copolymers; vinylidene fluoride-trifluoropropylene copolymers; vinylidene fluoride-tetrafluoroethylene-hexafluoropropylene copolymers; and vinylidene fluoride-ethylene-tetrafluoroethylene copolymers.

The porosity of the separator is preferably equal to or less than 98 volume% in terms of strength. The porosity of the separator is preferably equal to or more than 20 volume% in terms of charging and discharging characteristics.

Further, the separator may be a polymer gel composed of a polymer, such as acrylonitrile, ethylene oxide, propylene oxide, methyl methacrylate, vinyl acetate, vinylpyrrolidone, or polyvinylidene fluoride, and electrolyte. It is preferable to use the nonaqueous electrolyte in a gel state, which provides an advantageous effect of preventing liquid leakage.

Furthermore, the porous membrane, unwoven fabric, or the like as described above and a solvophilic polymer are desirably used as the above-mentioned separator, because the liquid retaining property of the electrolyte is improved. For example, on the surface of a polyethylene microporous membrane serving as a porous membrane and on a microporous wall surface, a solvophilic polymer is coated with a thickness of several $\mu$m or less to thereby form a film. Then, electrolyte is retained within the pores of this film, thereby forming the above-mentioned solvophilic polymer into a gel.

Examples of the above-mentioned solvophilic polymer include polyvinylidene fluoride, as well as polymers obtained by cross-linking acrylate monomers including an ethylene oxide group, an ester group, or the like, epoxy monomers, monomers including an isocyanato group, or the like. Note that a cross-linking reaction of these monomers can be caused by heating, ultraviolet ray (UV) irradiation, or activated light irradiation such as electron beam (EB) by using a radical initiator, for example.

The configuration of the lithium secondary battery of this disclosure is not particularly limited. For example, the lithium secondary battery may be a cylindrical type battery, an angular type battery, or a flat type battery having a positive electrode, a negative electrode, and a roll-shaped separator.

The lithium secondary battery of this disclosure is capable of extracting a discharge electricity amount exceeding the capacity of the conventional positive active material, which is about 200 mAh/g or more, even when the charging method is employed in which the maximum potential of the positive electrode during charging is, for example, 4.4 V (vs.Li/Li$^+$) or lower or 4.3 V (vs.Li/Li) or lower.

Specifically, also the conventional positive active material of this disclosure enables charging and discharging in the vicinity of a maximum potential of 4.5 V (vs.Li/Li$^+$) of the positive electrode. However, depending on the type of the nonaqueous electrolyte to be used, when the positive electrode potential upon charging is extremely high, the nonaqueous electrolyte is oxidized and decomposed, which may cause deterioration in the battery performance. Accordingly, in some cases, there is a demand for a lithium secondary battery having a sufficient discharge capacity even when a charging method in which the maximum potential of the positive electrode upon charging during use is equal to or less than 4.3 V (vs.Li/Li$^+$). The lithium secondary battery using the active material of this disclosure meets such a demand.

To obtain the positive active material having a high discharge capacity according to this disclosure, the ratio of the transition metal element constituting the lithium-transition metal composite oxide in a portion other than the transition metal site having a layered rock-salt-type crystal structure is preferably small. This achieves sufficiently uniform distribution of the transition metal elements, such as Co, Ni, and Mn of precursor core particles, in the precursor subjected to the sintering process, and selection of conditions for the sintering process appropriate for promoting the crystallization of the active material sample.

When the distribution of the transition metals in the precursor core particles subjected to the sintering process is not uniform, a sufficient discharge capacity cannot be obtained. The present inventors estimate the reason therefor as follows. Specifically, when the distribution of the transition metals in the precursor core particles subjected to the sintering process is not uniform, a portion other than the transition metal site of the layered rock-salt-type crystal structure (specifically, part of the transition metal element in the lithium site) may be present in the obtained lithium-transition metal composite oxide. In other words, so-called cation mixing may occur. A similar estimation can be also applied to the crystallization process in the sintering process. Specifically, when the crystallization of the active material sample is insufficient, cation mixing in the layered rock-salt-type crystal structure is liable to occur.

When the distribution of the above-mentioned transition metal element in the precursor core particles subjected to the sintering process has a high uniformity, the strength ratio of the diffraction peak between the (003) line and the (104) line obtained when the X-ray diffraction measurement result attributes to the space group R3-m tends to increase.

Accordingly, in this disclosure, the strength ratio $I_{(003)}/I_{(104)}$ of the diffraction peak between the (003) line and the (104) line in the X-ray diffraction measurement is preferably equal to or more than 1.0 after the discharge and equal to or more than 1.75 after charging. When the synthesis condition or synthesis procedure of the precursor is inappropriate, the above-mentioned peak strength ratio is a smaller value, which is a value less than "1" in many cases.

As described above, the positive active material for a lithium secondary battery according to this disclosure is prepared in accordance with the synthesis conditions and synthesis procedure herein described, and exerts a high performance as described above. The lithium secondary battery using the positive active material can obtain a high discharge capacity even when the charging upper-limit potential 4.5 V (vs.Li/Li$^+$) is set to a lower level, for example, even when the charging upper-limit potential is set to be lower than 4.4 V (vs.Li/Li$^+$) or 4.3 V (vs.Li/Li$^+$).

[Examples]

(Example 1)

A lithium-transition metal composite oxide $Li_{1.13}Co_{0.21}Ni_{0.17}Mn_{0.49}O_2$ was prepared in the manner as described below.

First, a carbonate precursor was prepared by a coprecipitation method. Specifically, 13.49 g of cobalt sulfate heptahydrate, 10.51 g of nickel sulfate hexahydrate, and 27.00 g of manganese sulfate pentahydrate were weighted. Next, the entirety was dissolved into 100 ml of ion-exchange water, and an aqueous 2.0 M sulfate solution (molar ratio Co : Ni : Mn of 24 : 20 : 56) containing Co, Ni, and Mn was prepared. On the other hand, a solution for dropping the aqueous solution to cause coprecipitation was prepared. Specifically, 750 ml of ion-exchange water was poured into a 2L reaction vessel to allow $CO_2$ gas to be bubbled for 30 minutes to thereby dissolve $CO_2$ in the ion-exchange water. The temperature of the reaction vessel was set to 50°C ($\pm$2°C), the above-mentioned aqueous sulfate solution was dropped at a speed of 3 ml/min at a rotational speed of 700 rpm, while stirring the inside of the reaction vessel by a puddle blade including a stirring motor. In this case, an aqueous solution containing 2.0 M sodium carbonate and 0.4 M ammonia was dropped as needed during the time from the start to the end of dropping, thereby controlling the pH in the reaction vessel to be maintained at 7.9 ($\pm$0.05). After completion of dropping, stirring in the reaction vessel was further continued for 3 h. After the stirring was stopped, the reaction vessel was placed for 12 h or longer.

Next, the coprecipitation carbonate particles generated in the reaction vessel were separated using a suction filtration apparatus. In this case, the separated particles were repeatedly cleaned five times using 200 ml of ion-exchange water. The sodium ions adhering to the particles were removed by this washing process.

After washing, the particles were dried. Specifically, the particles were dried in the air atmosphere, under a normal pressure, at a temperature of 80°C, for 20 h by using an electric furnace. After that, the particles were ground for several minutes by an automatic mortar made of agate to obtain a uniform particle diameter, thereby obtaining a desired coprecipitation carbonate precursor.

The lithium-transition metal composite oxide from the coprecipitation carbonate precursor thus obtained was prepared as follows.

To 2.277 g of the above-mentioned coprecipitation carbonate precursor, 0.966 g of lithium carbonate was added and mixed well using an automated mortar made of agate, thereby preparing a powder mix having a molar ratio Li : (Co, Ni, Mn) of 130 : 100. The obtained powder mix was molded at a pressure of 6 MPa by using a pellet molding machine, and a pellet having a diameter of 25 mm was obtained. The amount of powder mix subjected to pellet molding was determined through conversion of the mass of an assumed final product into 2 g.

Next, the obtained pellet was sintered. Specifically, one pellet described above was placed on an alumina boat having an entire length of about 100 mm, and was set in a box-type electric furnace (model number: AMF20). Then, the pellet was heated to 850°C from the room temperature in 10 hours in the air atmosphere and under the normal pressure, and was sintered for 4 h at 850°C. The above-mentioned box-type electric furnace has internal dimensions of 10 cm in height, 20 cm in width, and 30 cm in depth, and heating wires are formed at an interval of 20 cm in the width direction. After sintering, the heater was switched off and the alumina boat remained in the furnace and was naturally cooled. As a result, the temperature of the furnace is decreased to about 200°C after five hours, but after that, the speed of temperature decrease is rather slow. After lapse of all night and all day, it was confirmed that the temperature of the furnace was 100°C or lower, and the pellet was taken out. Subsequently, the particles were ground for several minutes by an automatic mortar made of agate to obtain a uniform particle diameter of the pellet. In this manner, the lithium-transition metal composite oxide $Li_{1.13}Co_{0.21}Ni_{0.17}Mn_{0.49}O_2$ according to Example 1 was prepared. The result of the ICP measurement showed that the Na content of the oxide was 2100 ppm.

(Examples 2 to 8)

Lithium-transition metal composite oxides according to Examples 2 to 8 were prepared in the same manner as in Example 1, except that Co/Me ratio: 0.24, Ni/Me ratio: 0.20, and Mn/Me ratio: 0.56 were changed to those described in the fields of Examples 2 to 8 of Table 1 when the coprecipitation carbonate precursor was prepared.

In the lithium-transition metal composite oxide according to Example 2, the BET specific surface was 3.0 $m^2$/g and the tap density was 1.7 g/cc. As for the differential pore volume, the pore size indicating the maximum value was in the range of 30 to 40 nm. The peak differential pore volume was 1.35 $mm^3$/(g·nm). The result of the ICP measurement showed that Na content of the oxide was 2100 ppm. As a result of the SEM observation, the size of primary particles constituting secondary particles was 0.3 $\mu$m or less.

(Example 9)

A lithium-transition metal composite oxide according to Example 9 was prepared in the same manner as in Example 2, except that the sintering temperature was changed from 850°C to 800°C.

(Example 10)

A lithium-transition metal composite oxide according to Example 10 was prepared in the same manner as in Example 2, except that 2.302 g of lithium carbonate was added to 0.938 g of the above-mentioned coprecipitation carbonate precursor and they were mixed well; and a powder mix having a molar ratio Li : (Co, Ni, Mn) of 125 : 100 was prepared.

(Example 11)

A lithium-transition metal composite oxide according to Example 11 was prepared in the same manner as in Example 2, except that 2.227 g of lithium carbonate was added to 1.016 g of the above-mentioned coprecipitation carbonate precursor and they were mixed well; a powder mix having a molar ratio Li : (Co, Ni, Mn) of 140 : 100 was prepared; and the sintering temperature of the pellet obtained by molding this powder mix was changed from 850°C to 800°C.

(Example 12)

A lithium-transition metal composite oxide according to Example 12 was prepared in the same manner as in Example 2, except that 2.203 g of lithium carbonate was added to 1.041 g of the above-mentioned coprecipitation carbonate precursor and they were mixed well; a powder mix having a molar ratio Li : (Co, Ni, Mn) of 145 : 100 was prepared; and the sintering temperature of the pellet obtained by molding this powder mix was changed from 850°C to 800°C.

(Example 13)

A lithium-transition metal composite oxide according to Example 13 was prepared in the same manner as in Example 2, except that 2.179 g of lithium carbonate was added to 1.065 g of the above-mentioned coprecipitation carbonate precursor and they were well mixed; a powder mix having a molar ratio Li : (Co, Ni, Mn) of 150 : 100 was prepared; and the sintering temperature of the pellet obtained by molding this powder mix was changed from 850°C to 800°C.

(Comparative Examples 1 to 8)

Lithium-transition metal composite oxides according to Comparative Examples 1 to 8 were prepared in the same manner as in Example 1, except that the Co/Me ratio: 0.24, the Ni/Me ratio: 0.20, and Mn/Me ratio: 0.56 for preparing a coprecipitation carbonate precursor were changed to those described in the fields of Comparative Examples 1 to 8 of Table 1.

(Comparative Example 9)

A lithium-transition metal composite oxide according to Comparative Example 9 was prepared in the same manner as in Example 2, except that the sintering temperature was changed from 850°C to 750°C.

(Comparative Example 10)

A lithium-transition metal composite oxide according to Comparative Example 10 was prepared in the same manner as in Example 2, except that the sintering temperature was changed from 850°C to 900°C.

(Comparative Example 11)

Conventional $LiCoO_2$ obtained by the solid state method was prepared instead of the lithium-transition metal composite oxide.

(Comparative Example 12)

A lithium-transition metal composite oxide $Li(Co_{2/3}Ni_{1/6}Mn_{1/6})O_2$ according to Comparative Example 12 was prepared in the same manner as in Example 1, except that the ratios were changed to Co/Me ratio: 0.67, Ni/Me ratio: 0.17, and Mn/Me ratio: 0.17, and the pH in the reaction vessel was changed to 11.5 to prepare a coprecipitation hydroxide precursor; and lithium hydroxide was added to the coprecipitation hydroxide precursor to prepare a powder mix having a molar ratio Li : (Co, Ni, Mn) of 1 : 1; and the sintering temperature was changed to 900°C, for example.

(Comparative Example 13)

A lithium-transition metal composite oxide according to Comparative Example 13 was prepared in the same manner as in Comparative Example 12, except that the composition was changed from $Li(Co_{2/3}Ni_{1/6}Mn_{1/6})O_2$ to $Li(Co_{1/3}Ni_{1/3}Mn_{1/3})O_2$.

(Comparative Example 14)

A lithium-transition metal composite oxide according to Comparative Example 14 was prepared in the same manner as in Comparative Example 12, except that the composition was changed from $Li(Co_{2/3}Ni_{1/6}Mn_{1/6})O_2$ to $Li(Ni_{1/2}Mn_{1/2})O_2$.

(Measurement of half width)

The half width of the X-ray diffraction peak was measured in accordance with the following conditions and procedure with respect to the lithium-transition metal composite oxides according to Examples 1 to 13 and Comparative Examples 1 to 14.
A powder X-ray diffraction measurement was carried out using an X-ray diffraction apparatus (produced by Rigaku Corporation; Model Name: MiniFlex II). A radiation source of CuK$\alpha$, and acceleration voltage and current of 30 kV and 15 mA, respectively, were used. With respect to the obtained X-ray diffraction data, the half width of the diffraction peak present at each of $2\theta = 18.6° \pm 1°$ and $2\theta = 44.1° \pm 1°$ on the X-ray diffraction diagram was determined using an integrated powder X-ray analysis software PDXL attached to the above-mentioned X-ray diffraction apparatus.

(Measurement of specific surface)

The specific surface of the lithium-transition metal composite oxide according to Example 2 was measured as follows. Specifically, a nitrogen adsorption amount $[m^2]$ with respect to the active material was obtained by one-point method using a specific surface measurement apparatus (Product name: MONOSORB) produced by YUASA IONICS Co. Ltd. The value obtained by dividing the obtained adsorption amount ($m^2$) by the mass (g) of the active material was determined as a BET specific surface. In the measurement, gas adsorption was performed on the active material by cooling with liquid nitrogen. Before cooling, the active material was pre-heated for 15 mins at 120°C. The amount of the measurement sample placed into the above-mentioned measurement apparatus was 0.5 g $\pm$ 0.01 g.

(Measurement of tap density)

The tap density of the lithium-transition metal composite oxide according to Example 2 was measured using a tapping apparatus (made in 1968) produced by REI EL ECTRIC CO. LTD. Specifically, the value obtained by dividing the volume of the active material obtained after 300 counts by the mass was determined as the tap density. The measurement was carried out by placing 2 g $\pm$ 0.2 g of an active material into a graduated cylinder of $10^{-2}$ $dm^3$.

(Measurement of pore volume distribution)

A pore volume distribution of the lithium-transition metal composite oxide according to Example 2 was measured in accordance with the following conditions and procedure. An autosorb iQ and a control/analysis software ASiQwin, which are produced by Quantachrome Instruments, were used for the measurement of the pore volume distribution. Into the sample tube for measurement, 1.00 g of a lithium-transition metal composite oxide, which was a sample to be measured, was placed and dried in vacuum for 12 h at 120°C, thereby sufficiently removing moisture within the sample to be measured. Next, the isotherm at each of the adsorption side and the desorpotion side was measured within the range of relative pressure P/P0 (P0 = about 770 mmHg) from 0 to 1 by a nitrogen gas adsorption method using liquid nitrogen. Then, calculation was performed by BJH method using the isotherm at the desorption side, thereby evaluating the pore distribution of the lithium-transition metal composite oxide.

(Measurement of particle diameter)

A particle size distribution of each lithium-transition metal composite oxide according to Examples 1 to 13 and Comparative Examples 1 to 10 was measured in accordance with the following conditions and procedure. Microtrac (Model number: MT3000) produced by Nikkiso Co., Ltd. was used as a measurement apparatus. The measurement apparatus includes an optical bench, a sample supply unit, and a computer having control software mounted thereon. The optical bench is provided with a wet-type cell having a laser light transmission window.

As the principle of the measurement of this apparatus, the following system is employed. Specifically, this system is configured to allow a liquid dispersion in which a sample to be measured is dispersed in a dispersion solvent to circulate within the wet-type cell, irradiate the wet-type cell with laser light, and convert a distribution of scattered light from the sample to be measured within the wet-type cell into a particle size distribution.

The sample supply unit of the above-mentioned measurement apparatus stores the above-mentioned liquid dispersion. The liquid dispersion is circulated and supplied from the sample supply unit to the wet-type cell. Further, ultrasonic vibration is constantly applied to the sample supply unit.

In the particle size distribution measurement at this time, water was used as the dispersion solvent, and Microtrac DHS for Win98 (MT3000) was used as the measurement control software. As material information to be set and input to the above-mentioned measurement apparatus, 1.33 was set as a refractive index of the solvent; TRANSPARENT was selected as transmittance; and a non-spherical shape was selected as a spherical particle.

Prior to the measurement of each sample, a so-called Set Zero operation was performed on the measurement apparatus. The term "Set zero operation" herein described refers to an operation for reducing adverse effects of disturbance factors (such as glass, contamination of a glass wall surface, or unevenness of glass) other than the scattered light from particles on the subsequent measurement. Specifically, a background operation is carried out in the state where only water is poured as a dispersion solvent into the sample supply unit and only the water circulates in the wet-type cell as the dispersion solvent, and background data is stored in the computer.

Subsequently, a sample LD (Sample Loading) operation was carried out. The sample LD operation is an operation for optimizing the concentration of the sample in the liquid dispersion to be circulated and supplied to the wet-type cell during the measurement. In the operation, the sample to be measured is manually placed into the sample supply unit until the sample reaches an appropriate amount, in accordance with an instruction of the measurement control software.

Subsequently, the actual measurement was carried out by pressing a measurement button of the measurement apparatus. Note that the above-mentioned measurement operation was repeated twice, and the measurement result was output as an average value from the computer. Note that the measurement results of this measurement apparatus are acquired as a particle size distribution histogram and values of D10, D50, and D90 (D10, D50, and D90 have such grain sizes that the accumulated volumes in the particle size distribution of secondary particles are 10%, 50%, and 90%, respectively).

As described above, after completion of dropping, stirring in the reaction vessel was further continued for 3 h in Example 1. In this stirring duration, the measured D50 value of the lithium-transition metal composite oxide was 8 $\mu$m.

The stirring duration after completion of dropping of the material aqueous solution in the above-mentioned example was changed from 3 h to 1 h, thereby obtaining a lithium-transition metal composite oxide having a measured D50 value of 5 $\mu$m. Further, the stirring duration after completion of dropping of the material aqueous solution was changed from 3 h to 10 h, thereby obtaining a lithium-transition metal composite oxide having a measured D50 value of 13 $\mu$m. Furthermore, the stirring duration after completion of dropping of the material aqueous solution was changed from 3 h to 15 h, thereby obtaining a lithium-transition metal composite oxide having a measured D50 value of 18 $\mu$m.

(Observation with scanning electron microscope)

The lithium-transition metal composite oxides according to Examples 1 to 13 and Comparative Examples 1 to 10 were observed with a scanning electron microscope (SEM). Specifically, part of each lithium-transition metal composite oxide was caused to adhere to a carbon tape and subjected to a Pt sputtering process, thereby preparing a sample. The obtained sample was observed with a scanning electron microscope (SEM).

In the state where secondary particles were sufficiently enlarged by SEM observation, the size of the primary particles constituting the secondary particles was determined based on the display scale. The measurement results showed that in Examples 1 to 13 and Comparative Examples 1 to 9, the size was equal to or smaller than 0.3 $\mu$m, whereas in Comparative Example 10, the size was equal to or higher than 0.5 $\mu$m.

(Preparation and evaluation of lithium secondary battery)

Lithium secondary batteries were prepared by the following procedure using each lithium-transition metal composite oxide according to Examples 1 to 13 and Comparative Examples 1 to 14 as the positive active material for a lithium secondary battery. Next, the battery characteristics of these lithium secondary batteries were evaluated.

In each of Examples 1 to 13 and Comparative Examples 1 to 14, in the mixing and dispersion process in which a paste for coating was prepared by mixing and dispersing the active material in a dispersion medium (N-methylpyrrolidone) with acetylene black (AB) and polyvinylidene fluoride (PVdF), the mass ratio (active material: PVdF : AB) was 90 : 5 : 5. A positive electrode plate was prepared by coating the paste for coating on one surface of an aluminum foil current collector having a thickness of 20 $\mu$m. To set the same test conditions for all the lithium secondary batteries according to Examples and Comparative Examples, the mass and coating thickness of the active material to be coated per given area were unified.

To correctly observe the solitary behavior of the positive electrode, metal lithium was used as an opposite electrode (that is, a negative electrode) with the nickel foil current collector. A sufficient amount of metal lithium was disposed on the negative electrode so as to prevent the capacity of each lithium secondary battery from being limited by the negative electrode.

The following materials were respectively used as an exterior body, and an electrolyte and a separator, which were encapsulated in the exterior body.

The electrolyte used was a solution obtained by dissolving $LiPF_6$ in a mixed solvent (volume ratio of 6 : 7 : 7) of ethylene carbonate (EC)/ethyl methyl carbonate (EMC)/dimethyl carbonate (DMC) such that the concentration of $LiPF_6$ could be 1 mol/l.

The separator used was a microporous membrane made of polypropylene where the surface thereof was modified by polyacrylate.

The exterior body used was a metal/resin composite film made of polyethylene terephthalate (15 $\mu$m)/aluminium foil (50 $\mu$m)/metal adhesive polypropylene film (50 $\mu$m).

In the exterior body having the configuration described above, the electrodes are housed such that open ends of a positive electrode terminal and a negative electrode terminal are externally exposed; a fusion bonding margin at which the inner surfaces of the above-mentioned metal/resin composite film face each other was air-tightly sealed except for a portion serving as a liquid injection hole. Subsequently, the liquid injection hole was sealed after the injection of the above-mentioned electrolyte.

The lithium secondary batteries prepared by the above procedure using the respective lithium-transition metal composite oxides according to Examples 1 to 13 and Comparative Examples 1 to 14 as their positive active materials for lithium secondary battery were subjected to an initial charge/discharge process at 25°C. Specifically, in the initial charge/discharge process, constant-current constant-voltage charging was carried out at a current of 0.1 CmA and a voltage of 4.6 V, and the end-of-charge condition was set at the time point when the current value attenuated to 1/6. Constant current discharging was carried out at a current of 0.1 CmA and the end-of-discharge voltage of 2.0 V. This charging and discharging was carried out for 2 cycles. A 30-minute pausing process was set after charging and after discharging.

(Charging and discharging test)

Next, a charging and discharging test for one cycle was conducted on each lithium secondary battery by changing the charging voltage. A voltage control was performed on all positive electrode potentials. The conditions for this charging and discharging test are the same as the conditions for the above-mentioned initial charge/discharge process, except that the charging voltage was set to 4.3 V. The discharged electrical quantity obtained at that time was recorded as a discharge capacity (0.1 C) mAh/g.

(High rate discharge test)

Subsequently, each of the lithium secondary batteries was charged at a charging voltage of 4.3 V and a current of 0.1 CmA. Then, after a 30-minute pause, each of the lithium secondary batteries was discharged at 1 CmA and the end-of-discharge voltage of 2.0 V. The percentage of the discharge capacity obtained at that time with respect to the discharge capacity (mAh/g) obtained at the time of 0.1 CmA was recorded as a high rate discharge performance (1C/0.1C).
Table 1 shows the results of the above-mentioned test on the lithium secondary battery in which the lithium-transition metal composite oxides according to Examples 1 to 13 and Comparative Examples 1 to 14 are used as the positive active material for a lithium secondary battery.

[Table 1]

| | Li/Me ratio | Sintering temperature °C | Co/Me ratio | Ni/Me ratio | Mn/Me ratio | Half width | | Discharge capacity (0.1C) mAh/g | High rate discharge performance (1C/0.1C) % |
|---|---|---|---|---|---|---|---|---|---|
| | | | | | | (003) | (104) | | |
| Example 1 | 1.3 | 850 | 0.24 | 0.20 | 0.56 | 0.223 | 0.308 | 220 | 88 |
| Example 2 | 1.3 | 850 | 0.26 | 0.20 | 0.54 | 0.213 | 0.289 | 217 | 90 |
| Example 3 | 1.3 | 850 | 0.28 | 0.20 | 0.52 | 0.236 | 0.328 | 209 | 89 |
| Example 4 | 1.3 | 850 | 0.30 | 0.20 | 0.50 | 0.243 | 0.356 | 199 | 88 |
| Example 5 | 1.3 | 850 | 0.32 | 0.20 | 0.48 | 0.271 | 0.392 | 197 | 87 |
| Example 6 | 1.3 | 850 | 0.36 | 0.20 | 0.44 | 0.303 | 0.424 | 193 | 85 |
| Example 7 | 1.3 | 850 | 0.26 | 0.15 | 0.59 | 0.225 | 0.297 | 217 | 90 |
| Example 8 | 1.3 | 850 | 0.26 | 0.25 | 0.49 | 0.204 | 0.278 | 210 | 90 |
| Example 9 | 1.3 | 800 | 0.26 | 0.20 | 0.54 | 0.260 | 0.370 | 208 | 88 |
| Example 10 | 1.25 | 850 | 0.26 | 0.20 | 0.54 | 0.231 | 0.303 | 215 | 88 |
| Example 11 | 1.4 | 800 | 0.26 | 0.20 | 0.54 | 0.249 | 0.357 | 210 | 89 |
| Example 12 | 1.45 | 800 | 0.26 | 0.20 | 0.54 | 0.236 | 0.342 | 204 | 89 |
| Example 13 | 1.5 | 800 | 0.26 | 0.20 | 0.54 | 0.221 | 0.327 | 198 | 89 |
| Comparative Example 1 | 1.3 | 850 | 0.08 | 0.20 | 0.72 | 0.240 | 0.276 | 178 | 65 |
| Comparative Example 2 | 1.3 | 850 | 0.10 | 0.20 | 0.70 | 0.229 | 0.290 | 182 | 67 |
| Comparative Example 3 | 1.3 | 850 | 0.12 | 0.20 | 0.68 | 0.226 | 0.325 | 193 | 70 |
| Comparative Example 4 | 1.3 | 850 | 0.15 | 0.20 | 0.65 | 0.203 | 0.273 | 209 | 72 |
| Comparative Example 5 | 1.3 | 850 | 0.18 | 0.20 | 0.62 | 0.201 | 0.280 | 223 | 73 |
| Comparative Example 6 | 1.3 | 850 | 020 | 0.20 | 0.60 | 0.206 | 0.291 | 222 | 75 |

| | Li/Me ratio | Sintering temperature °C | Co/Me ratio | Ni/Me ratio | Mn/Me ratio | Half width | | Discharge capacity (0.1C) mAh/g | High rate discharge performance (1C/0.1C) % |
|---|---|---|---|---|---|---|---|---|---|
| | | | | | | (003) | (104) | | |
| Comparative Example 7 | 1.3 | 850 | 0.22 | 0.20 | 0.58 | 0.210 | 0.278 | 222 | 78 |
| Comparative Example 8 | 1.3 | 850 | 0.40 | 0.20 | 0.40 | 0.324 | 0.445 | 186 | 75 |
| Comparative Example 9 | 1.3 | 750 | 0.26 | 0.20 | 0.54 | 0.355 | 0.438 | 187 | 70 |
| Comparative Example 10 | 1.3 | 900 | 0.26 | 0.20 | 0.54 | 0.178 | 0.247 | 202 | 68 |
| Comparative Example 11 | 1.0 | 900 | 1.00 | 0.00 | 0.00 | 0.161 | 0.254 | 163 | 95 |
| Comparative Example 12 | 1.0 | 900 | 0.67 | 0.17 | 0.17 | 0.164 | 0.258 | 157 | 91 |
| Comparative Example 13 | 1.0 | 900 | 0.33 | 0.33 | 0.33 | 0.167 | 0.263 | 155 | 85 |
| Comparative Example 14 | 1.0 | 900 | 0.00 | 0.50 | 0.50 | 0.172 | 0.268 | 155 | 82 |

EP 2 692 693 B1

18

It is seen from Table 1 that the lithium secondary batteries using the positive active materials as illustrated in Examples 1 to 13 are lithium secondary batteries having an excellent high rate discharge performance and a high discharge capacity. In other words, these positive active materials satisfy the following conditions. That is, the Co/Me ratio is 0.24 to 0.36; the sintering temperature is 800 to 850°C; and the half width of the diffraction peak that attributes to the (003) line ranges from 0.204° to 0.303°, or the half width of the diffraction peak that attributes to the (104) line ranges from 0.278° to 0.424°.

On the other hand, in the case of using the positive active material that does not satisfy these conditions, that is, in the case of using the positive active material containing a lithium-transition metal composite oxide (Li/Me ratio is 1.3) having a Co/Me ratio smaller than 0.24 or higher than 0.36 and sintered at 850°C, the high rate discharge performance of each lithium secondary battery is reduced as shown in Comparative Examples 1 to 8.

More specifically, as shown in Table 1, even when the Co/Me ratio is 0.24 to 0.36, if the sintering temperature is lower than 800°C (750°C) as shown in Comparative Example 9, a desired lithium secondary battery is not obtained. Specifically, the half width of the diffraction peak that attributes to the (003) line is higher than 0.303° and the half width of the diffraction peak that attributes to the (104) line is higher than 0.424°. As a result, the high rate discharge capacity of the lithium secondary battery decreases and the discharge performance thereof deteriorates. Also when the sintering temperature exceeds 850°C (900°C) as shown in Comparative Example 10, a desired lithium secondary battery is not obtained. Specifically, the half width of the diffraction peak that attributes to the (003) line is smaller than 0.204° and the half width of the diffraction peak that attributes to the (104) line is smaller than 0.278°. As a result, high rate discharge performance deteriorates while the low-rate discharge capacity of the lithium secondary battery is large.

In the lithium secondary battery using the positive active material of a so-called $LiMeO_2$ type, instead of a so-called lithium excess type, the high rate discharge performance is improved as the Co/Me ratio increases as noted in Comparative Examples 11 to 14. On the other hand, in the positive active material of the lithium excess type, the high rate discharge performance is improved until the Co/Me ratio reaches 0.36 as shown in the above-mentioned Examples 1 to 13 and Comparative Examples 1 to 10. However, if the Co/Me ratio further increases, the high rate discharge performance deteriorates. Accordingly, the effect of remarkably improving the high rate discharge performance within a Co/Me of 0.24 to 0.36 can be inherent in the positive active material of the lithium excess type.

In the above-mentioned examples, the values representing the compositions of Li, Co, Ni, and Mn constituting the lithium-transition metal composite oxide are described based on the mixing ratio of coprecipitation carbonate precursor and lithium carbonate that are subjected to the sintering process. Further, the value of the half width of each X-ray diffraction peak of the lithium-transition metal composite oxide is described based on the result obtained after performing the X-ray diffraction measurement on the lithium-transition metal composite oxide prior to the preparation of electrodes. However, each value can be recognized by sampling a positive active material in accordance with the following procedure from a nonaqueous electrolyte secondary battery having a charging and discharging history.

First, it is particularly necessary to fully discharge the positive active material contained in the positive electrode so as to quantitate the amount of Li.

As a method for fully discharging the positive active material, it is preferable to employ a method in which a cell is formed of the positive electrode described above and the negative electrode that allows a necessary amount of lithium ions to be emitted so as to fully discharge the above-mentioned positive electrode, and an operation for discharging the positive electrode is carried out. Metal lithium may be used as the above-mentioned negative electrode. The cell may be a two-terminal cell, but it is preferable to control and monitor the positive electrode potential with respect to a reference electrode by using a three-terminal cell provided with a reference electrode. The electrolyte used for the cell preferably has the same nonaqueous electrolyte composition as that used for the nonaqueous electrolyte secondary battery, if at all possible.

Examples of the operation for discharging the positive electrode using the above-mentioned cell include a continuous discharge method or an intermittent discharge method. The discharge current should be 0.1 CmA or lower with the end-of-discharge potential of 2.0 V (vs.Li/Li⁻). After the above-mentioned discharge operation, a sufficient pause time is provided. After that, it is confirmed if the open-circuit potential is equal to or lower than 3.0 V (vs.Li/Li⁺). When the open-circuit potential obtained after the above-mentioned discharge operation exceeds 3.0 V (vs.Li/Li⁺), it is necessary to repeat the above-mentioned operation by adopting a smaller discharge current value until the open-circuit potential decreases to 3.0 V (vs.Li/Li⁺) or lower.

Next, after the positive electrode is taken out of the cell, it is desirable to remove the electrolyte adhering to the positive electrode. This is because if the electrolyte adheres to the positive electrode, the lithium salt dissolving in the electrolyte has an effect on the analysis result of the value of Li/Me. Examples of a method for removing the electrolyte include washing using a volatile solvent. A volatile solvent that allows the lithium salt to be easily dissolved therein is preferably used as the volatile solvent. Specifically, dimethyl carbonate is an example of the volatile solvent. A volatile solvent obtained by reducing the amount of water to a lithium battery grade is preferably used. If the amount of water is large, Li contained in the positive active material is eluted, so that the value of Li/Me cannot be correctly obtained.

A positive composite containing the positive active material is sampled from the positive electrode plate subjected to the above-mentioned treatment. This positive composite is subjected to a quantitative analysis. This makes it possible to recognize the compositions of Li, Co, Ni, and Mn constituting the lithium-transition metal composite oxide.

To recognize the value of the half width of each X-ray diffraction peak, it is not necessary to fully discharge the positive active material, but it is preferable to bring the positive active material into the discharged state. Alternatively, the positive electrode plate from which the electrolyte is removed may be directly subjected to the X-ray diffraction measurement, or may be subjected to the X-ray diffraction measurement after sampling the positive composite from the positive electrode plate.

The present inventors obtained the value of the half width of each X-ray diffraction peak by sampling the positive composite from the nonaqueous electrolyte battery according to each example. This value was compared with the value measured prior to the preparation of electrodes. The comparison results including the test history after the preparation are shown below.

The lithium secondary battery according to Example 2, which was prepared in accordance with the procedure described in the field of the above-mentioned example was subjected to the initial charge/discharge process at a temperature of 25°C. The lithium secondary battery was subjected to constant-current constant-voltage charging with a current of 0.1 CmA and a voltage of 4.6 V. Note that the end-of-charge condition was set at the time point when the current value attenuated to 1/6. Constant current discharge was performed on the lithium secondary battery at a current of 0.1 CmA and the end-of-discharge voltage of 2.0 V. This charging and discharging was carried out for two cycles. In this case, a 30-minute pausing process was set after charging and after discharging of each lithium secondary battery.

The charging for each lithium secondary battery in the subsequent tests was carried out under the condition of constant-current constant-voltage charging at a current of 0.1 CmA and a voltage of 4.3 V. The end-of-charge condition was set at the time point when the current value attenuated to 1/6. Further, a 30-minute pausing process was set after charging and after discharging of each lithium secondary battery.

First, the lithium secondary battery was charged and discharged for three cycles under the discharge conditions of a current of 0.1 CmA and a constant current discharge at the end-of-discharge voltage of 2.0 V. Next, the lithium secondary battery was charged and discharged for one cycle under the discharge conditions of a current of 1 CmA and the end-of-discharge voltage of 2.0 V. Next, the lithium secondary battery was charged and discharged for one cycle under the discharge conditions of a current of 2 CmA and the end-of-discharge voltage of 2.0 V. Then, the lithium secondary battery was charged and discharged for three cycles under the discharge conditions of a current of 1 CmA and the end-of-discharge voltage of 2.0 V.

Next, the lithium secondary battery was discharged down to 2.0 V at a current of 0.1 CmA. After that, this battery was disassembled and the positive electrode plate was taken out. This positive electrode plate was cleaned with dimethyl carbonate and the solvent was removed at room temperature. Subsequently, the current collector made of aluminum was removed from the positive electrode plate to thereby sample a positive composite. The sampled positive composite was slightly solved using an agate mortar, was fixed to a glass holder for measurement, and was subjected to X-ray diffraction measurement using a CuKα radiation.

It was found from the obtained X-ray diffraction pattern that when the space group R3-m was used for the crystal structure model, the half width of the diffraction peak that attributes to the (003) line was 0.214°, and that the half width of the diffraction peak that attributes to the (104) line was 0.291°. Before the preparation of the battery, the half width of the diffraction peak that attributes to the (003) line was 0.213° and the half width of the diffraction peak that attributes to the (104) line was 0.289° as shown in Table 1. It is found from this that the value of the half width of the positive active material has not changed even in the nonaqueous electrolyte battery having various charging and discharging histories.

As described in the above-mentioned examples, according to this disclosure, only the lithium secondary battery in which the lithium-transition metal composite oxide that satisfies the following conditions is used as the positive active material provides an advantageous effect of remarkably improving the high rate discharge performance. That is, the above-mentioned conditions are as follows.

The lithium-transition metal composite oxide is represented by the composition formula of $Li_{1+\alpha}Me_{1-\alpha}O_2$ (Me is a transition metal element including Co, Ni, and Mn; $1.2 < (1 + \alpha)/(1 - \alpha) < 1.6$); the molar ratio Co/Me of Co contained in the Me ranges from 0.24 to 0.36; and

when the space group R3-m is used for the crystal structure mode based on the X-ray diffraction pattern, the half width of the diffraction peak that attributes to the (003) line ranges from 0.204° to 0.303°, or the half width of the diffraction peak that attributes to the (104) line ranges from 0.278° to 0.424°.

A lithium secondary battery having an excellent high rate discharge performance can be provided by using a positive active material containing a novel lithium-transition metal composite oxide of this disclosure. Accordingly, this lithium secondary battery is effective as a lithium secondary battery for a hybrid automobile and an electric vehicle.

A positive active material for a lithium secondary battery, a manufacturing method thereof, a lithium secondary battery electrode, and a lithium secondary battery according to this disclosure can also be expressed as follows.

A first aspect of this disclosure is a positive active material for a lithium secondary battery containing a lithium-transition metal composite oxide represented by a composition formula of $Li_{1+\alpha}Me_{1-\alpha}O_2$ (Me is a transition metal element including Co, Ni, and Mn; $1.2 < (1 + \alpha)/(1 - \alpha) < 1.6$). In the above-mentioned lithium-transition metal composite oxide, the molar ratio Mn/Me of Mn contained in the Me ranges from 0.44 to 0.65, and the molar ratio Co/Me of Co contained in the Me ranges from 0.24 to 0.36. When the space group R3-m is used for the crystal structure model based on the X-ray diffraction pattern, the half width of the diffraction peak that attributes to the (003) line ranges from 0.204° to 0.303°, or the half width of the diffraction peak that attributes to the (104) line ranges from 0.278° to 0.424°.

A second aspect of this disclosure is the positive active material for a lithium secondary battery according to the above-mentioned first aspect, in which the above-mentioned lithium-transition metal composite oxide is represented by a composition formula of $Li_{1+\alpha}Me_{1-\alpha}O_2$ (Me is a transition metal element including Co, Ni, and Mn and represented by $1.25 \le (1 + \alpha)/(1 - \alpha) \le 1.5$).

A third aspect of this disclosure is a positive active material for a lithium secondary battery according to one of the above-mentioned first and second aspects, in which the above-mentioned lithium-transition metal composite oxide is sintered at 800 to 850°C.

A fourth aspect of this disclosure is a method of manufacturing the positive active material for a lithium secondary battery according to the above-mentioned third aspect, the method including mixing a Li compound with a carbonate precursor of a transition metal containing Co, Ni, and Mn, and sintering the resultant at 800 to 850°C to thereby manufacture the above-mentioned lithium-transition metal composite oxide.

A fifth aspect of this disclosure is a lithium secondary battery electrode containing a positive active material for a lithium secondary battery according to any one of the first to third aspects described above.

A sixth aspect of this disclosure is a lithium secondary battery including the lithium secondary battery electrode according to the above-mentioned fifth aspect.

According to any one of the first to sixth aspects of this disclosure, it is possible to provide a lithium secondary battery including a positive active material containing a novel lithium-transition metal composite oxide and having an excellent high rate discharge performance.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A positive active material for a lithium secondary battery containing a lithium-transition metal composite oxide represented by a composition formula of $Li_1+_\alpha Me_{1-\alpha}O_2$, wherein Me is a transition metal element including Co, Ni, and Mn, and $1.2 < (1 + \alpha) / (1 - \alpha) < 1.6$, and wherein
a molar ratio (Co/Me) of Co contained in the Me ranges from 0.24 to 0.36,
wherein a molar ratio (Mn/Me) of Mn contained in the Me ranges from 0.44 to 0.65, and
when a space group R3-m is used for a crystal structure model based on an X-ray diffraction pattern, a half width of a diffraction peak that attributes to a (003) line ranges from 0.204° to 0.303°, or a half width of a diffraction peak that attributes to a (104) line ranges from 0.278° to 0.424°.

2. The positive active material for a lithium secondary battery according to claim 1, wherein the lithium-transition metal composite oxide is represented by a composition formula of $Li_{1+\alpha}Me_{1-\alpha}O_2$ wherein Me is a transition metal element including Co, Ni, and Mn and represented by $1.25 < (1 + \alpha)/(1 - \alpha) \le 1.5$.

3. The positive active material for a lithium secondary battery according to claim 1 or 2, wherein the positive active material contains the lithium-transition metal composite oxide sintered at 800 to 850°C.

4. The positive active material for a lithium secondary battery according to any one of claims 1 to 3, wherein the positive active material further contains Na, and the content of the Na is equal to or more than 1000 ppm.

5. The positive active material for a lithium secondary battery according to any one of claims 1 to 4, wherein a BET specific surface is equal to or more than 1 $m^2/g$.

6. The positive active material for a lithium secondary battery according to any one of claims 1 to 5, wherein a tap density is equal to or more than 1.25 g/cc.

7. The positive active material for a lithium secondary battery according to any one of claims 1 to 6, wherein a pore size representing a maximum value of a differential pore volume ranges from 30 to 40 nm, and a peak differential pore volume is equal to or more than 0.85 $mm^3$/(g-nm).

8. A method of manufacturing the positive active material for a lithium secondary battery according to any one of claims 1 to 7, comprising:

   mixing a Li compound with a carbonate precursor of a transition metal containing Co, Ni, and Mn;
   sintering the mixture at 800 to 850°C to prepare a lithium-transition metal composite oxide; and
   using the lithium-transition metal composite oxide as the positive active material for a lithium secondary battery.

9. A lithium secondary battery electrode containing the positive active material for a lithium secondary battery according to any one of claims 1 to 7.

10. A lithium secondary battery including the lithium secondary battery electrode according to claim 9.


**Patentansprüche**

1. Positives aktives Material für eine Lithium-Sekundärbatterie, das ein Lithium-Übergangsmetall-Mischoxid enthält, das durch eine Zusammensetzungsformel $Li_{1+\alpha}Me_{1-\alpha}O_2$ repräsentiert wird,
   wobei Me ein Übergangsmetallelement ist, das Co, Ni, und Mn umfasst, und $1,2 < (1 + \alpha)/ (1 - \alpha) < 1,6$, und
   wobei ein Molverhältnis (Co/Me) von Co, das in Me enthalten ist, von 0,24 bis 0,36 reicht,
   wobei ein Molverhältnis (Mn/Me) von Mn, das in Me enthalten ist, von 0,44 bis 0,65 reicht, und
   wenn eine Raumgruppe R3-m für ein Kristallstukturmodell beruhend auf einem Röntgenbeugungsmuster verwendet wird, eine Halbwertsbreite einer Beugungsspitze, die einer (003)-Linie zuzurechnen ist, von 0,204° bis 0,303° reicht, oder eine Halbwertsbreite einer Beugungsspitze, die einer (104)-Linie zuzurechnen ist, von 0,278° bis 0,424° reicht.

2. Positives aktives Material für eine Lithium-Sekundärbatterie nach Anspruch 1, wobei das Lithium-Übergangsmetall-Mischoxid durch eine Zusammensetzungsformel $Li_{1+\alpha}Me_{1-\alpha}O_2$ repräsentiert wird, wobei Me ein Übergangsmetallelement ist, das Co, Ni, und Mn umfasst und durch $1,25 < (1 + \alpha) / (1 - \alpha) \leq 1,5$ repräsentiert wird.

3. Positives aktives Material für eine Lithium-Sekundärbatterie nach Anspruch 1 oder 2, wobei das positive aktive Material das bei 800 bis 850°C gesinterte Lithium-Übergangsmetall-Mischoxid enthält.

4. Positives aktives Material für eine Lithium-Sekundärbatterie nach einem der Ansprüche 1 bis 3, wobei das positive aktive Material ferner Na enthält und der Gehalt des Na gleich oder größer als 1000 ppm ist.

5. Positives aktives Material für eine Lithium-Sekundärbatterie nach einem der Ansprüche 1 bis 4, wobei eine spezifische BET-Oberfläche gleich oder größer als 1 $m^2$/g ist.

6. Positives aktives Material für eine Lithium-Sekundärbatterie nach einem der Ansprüche 1 bis 5, wobei eine Klopfdichte gleich oder größer als 1,25 g/cc ist.

7. Positives aktives Material für eine Lithium-Sekundärbatterie nach einem der Ansprüche 1 bis 6, wobei eine Porengröße, die einen Maximalwert eines differentiellen Porenvolumens repräsentiert, von 30 bis 40 nm reicht, und ein differentielles Spitzenporenvolumen gleich oder größer als 0,85 $mm^3$/(g-nm) ist.

8. Verfahren zum Herstellen des positiven aktiven Materials für eine Lithium-Sekundärbatterie nach einem der Ansprüche 1 bis 7, das aufweist:

   Mischen einer Li-Verbindung mit einem Karbonatvorläufer eines Übergangsmetalls, das Co, Ni, und Mn enthält;
   Sintern der Mischung bei 800 bis 850°C, um ein Lithium-Übergangsmetall-Mischoxid herzustellen; und
   Verwenden des Lithium-Übergangsmetall-Mischoxids als das positive aktive Material für eine Lithium-Sekundärbatterie.

9. Lithium-Sekundärbatterieelektrode, die das positive aktive Material für eine Lithium-Sekundärbatterie nach einem der Ansprüche 1 bis 7 enthält.

**10.** Lithium-Sekundärbatterie, die die Lithium-Sekundärbatterieelektrode nach Anspruch 9 aufweist.

**Revendications**

1. Matériau positif actif pour une batterie secondaire au lithium contenant un oxyde composite de lithium-métal de transition représenté par la formule de composition $Li_{1+\alpha}Me_{1-\alpha}O_2$,
   où Me est un élément de métal de transition comprenant Co, Ni et Mn, et $1,2 < (1 + \alpha)/ (1 - \alpha) < 1,6$, et
   où un rapport molaire (Co/Me) du Co contenu dans le Me est compris entre 0,24 et 0,36, où un rapport molaire (Mn/Me) du Mn contenu dans le Me est compris entre 0,44 et 0,65, et où,
   quand un groupe spatial R3-m est utilisé pour un modèle de structure cristalline basé sur un diagramme de diffraction des rayons X, une demi-largeur de pic de diffraction attribuée à une ligne (003) est comprise entre 0,204° et 0,303°, ou demi-largeur de pic de diffraction attribuée à une ligne (104) est comprise entre 0,278° et 0,424°.

2. Matériau positif actif pour une batterie secondaire au lithium selon la revendication 1, où l'oxyde composite de lithium-métal de transition est représenté par la formule de composition $Li_{1+\alpha}Me_{1-\alpha}O_2$ où Me est un élément de métal de transition comprenant Co, Ni et Mn, et représenté par $1,25 < (1 + \alpha) / (1 - \alpha) \leq 1,5$.

3. Matériau positif actif pour une batterie secondaire au lithium selon la revendication 1 ou la revendication 2, où le matériau positif actif contient l'oxyde composite de lithium-métal de transition fritté entre 800 et 850° C.

4. Matériau positif actif pour une batterie secondaire au lithium selon l'une des revendications 1 à 3, où le matériau positif actif contient en outre Na, et où la teneur en Na est égale ou supérieure à 1000 ppm.

5. Matériau positif actif pour une batterie secondaire au lithium selon l'une des revendications 1 à 4, où une surface spécifique BET est égale ou supérieure à 1 m$^2$/g.

6. Matériau positif actif pour une batterie secondaire au lithium selon l'une des revendications 1 à 5, où une masse volumique après tassement est égale ou supérieure à 1,25 g/cc.

7. Matériau positif actif pour une batterie secondaire au lithium selon l'une des revendications 1 à 6, où une grandeur de pore représentant une valeur maximale d'un volume de pore différentiel est comprise entre 30 et 40 nm, et un volume de pore différentiel de crête est égal ou supérieur à 0,85 mm$^3$/(g-nm).

8. Procédé de fabrication d'un matériau positif actif pour une batterie secondaire au lithium selon l'une des revendications 1 à 7, comprenant :

   le mélange d'un composé Li avec un précurseur de carbonate d'un métal de transition contenant Co, Ni et Mn ;
   le frittage du mélange entre 800 et 850° C pour préparer un oxyde composite de lithium-métal de transition ; et
   l'utilisation de l'oxyde composite de lithium-métal de transition comme matériau positif actif pour une batterie secondaire au lithium.

9. Électrode de batterie secondaire au lithium contenant le matériau positif actif pour une batterie secondaire au lithium selon l'une des revendications 1 à 7.

10. Batterie secondaire au lithium comprenant l'électrode de batterie secondaire au lithium selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6677082 B
- US 7135252 B
- JP 2010086690 A
- WO 2012091015 A
- WO 2011040383 A1
- WO 2011125722 A1
- WO 2011071094 A1